# EUROPEAN PATENT APPLICATION

(11) **EP 4 659 895 A2**
(43) Date of publication of application: **10.12.2025**
(21) Application number: 25177069.9
(22) Date of filing: 16.05.2025
(51) Int. Cl.: B23Q 7/04, B23Q 11/00

(54) **MACHINING CENTER CHIP REMOVAL**

(30) Priority: 17.05.2024 US 202418667798
(71) Applicant: RTX Corporation, Farmington, CT 06032 (US)
(72) Inventor: BOGAN, Casey J., Shapleigh, 04076 (US)
(74) Representative: Dehns

(57) **Abstract**

A machining center (20) has: a part holder (22) for holding a part (700) during machining; a plurality of tools (70); a spindle (24) for holding an in-use tool (70) of the plurality of tools(70); a tool magazine (30) containing at least a partial remainder of the plurality of tools (70); and a tool changer (40) for transferring tools (70) between the tool magazine (30) and the spindle (24). At least one of the tools (70) is a grasper (70) having claws shiftable between a first condition and a second condition, the second condition open relative to the first condition. Multiple other of the tools (70) are held by respective tool holders (42).

## Description

### BACKGROUND

The disclosure relates to gas turbine engines. More particularly, the disclosure relates to inner diameter (ID) machining of metallic components.

Gas turbine engines (used in propulsion and power applications and broadly inclusive of turbojets, turboprops, turbofans, turboshafts, industrial gas turbines, and the like) feature a number of internally- and externally-machined metallic components. Example components include disks (e.g., including integrally bladed disks), tangential onboard injectors (TOBI), seal housings and runners, bearing housings, spacers, and the like.

Such machining may be performed by automated tooling such as a machining center. A machining center typically includes a spindle for holding an in-use tool, a magazine for storing other tools, a tool changer for shifting tools between the magazine and spindle, and a part holder or fixture. In typical situations, the part holder is not a fixed part holder but is, itself, actuatable so that compound combinations of movements between the spindle and part holder may achieve a desired machining operation.

Example machining centers are known as 5-axis machining centers. One group of examples is available from DMG MORI Manufacturing USA, Inc., Davis, California (e.g., the DMU 65 machining center). The spindle may have multiple degrees of freedom such as rotation about an axis (e.g., for a drilling or milling operation) and x-y-z translation.

As noted above, such example machining centers often have a magazine of different tools for performing different operations. The tools are each typically mounted to a respective tool holder that presents uniform interfaces for mounting in a spindle of the machining center and for engagement by a tool changer to move the tool and tool holder combination between the magazine and the spindle. Various additional levels of adapters may be present such as the use of a collet intervening between a given tool holder configuration and the tool.

When using such a machining center in a turning operation (e.g., particularly a rough turning operation) typically long chips or swarfs are generated. This is in distinction to finer finishing processes which may often be abrasive in nature. When machining such components, a so-called "bird's nest" of such chips/swarf will frequently build up within the internal/inner diameter space of the component. This is often the case even when machining the outer diameter surface wherein the swarf will often curl and pass axially around an end rim and into the interior or be flung into the interior.

### SUMMARY

One aspect of the disclosure involves a machining center having: a part holder for holding a part during machining; a plurality of tools; a spindle for holding an in-use tool of the plurality of tools; a tool magazine containing at least a partial remainder of the plurality of tools; and a tool changer for transferring tools between the tool magazine and the spindle. At least one of the tools is a grasper having a plurality of claws shiftable between a first condition and a second condition, the second condition open relative to the first condition. Multiple other of the tools are held by respective tool holders.

In a further example of any of the foregoing, additionally and/or alternatively, the grasper is fluid actuated and a fluid supply path for actuating the grasper passes through the spindle.

In a further example of any of the foregoing, additionally and/or alternatively, the grasper is spring biased toward a closed condition.

In a further example of any of the foregoing, additionally and/or alternatively, at least one of the plurality of tools comprises a carbide bit.

In a further example of any of the foregoing, additionally and/or alternatively, the grasper is a multi-claw grasper.

In a further example of any of the foregoing, additionally and/or alternatively, the grasper comprises: plurality of links respectively associated with said plurality of claws; a shank; and a piston reciprocally movable within the shank. Each of the claws has: a distal end; a respective first pivot axis relative to the piston; and a respective second pivot axis relative to the associated link. Each of the links has a respective third pivot axis relative to the shank.

In a further example of any of the foregoing, additionally and/or alternatively, the claws are made of polyoxymethylene (POM) and the links are made of aluminum alloy.

In a further example of any of the foregoing, additionally and/or alternatively, the shank is held by a tool holder.

A further example of any of the foregoing may additionally and/or alternatively include a fluid passageway through the tool holder.

A further aspect of the disclosure involves a method for using the machining center. The method comprises: using a cutting tool held by the spindle, machining an inner diameter (ID) surface of a part held by the part holder, the machining producing a cutting accumulation within the part; using the tool changer, removing the at least one cutting tool from the spindle and installing the grasper to the spindle; and using the grasper held by the spindle, removing the cutting accumulation from the part.

In a further example of any of the foregoing, additionally and/or alternatively, the removing comprises pneumatically opening the grasper via the spindle.

In a further example of any of the foregoing, additionally and/or alternatively, the part is selected from the group consisting of: bearing housings; and tangential onboard injectors (TOBI).

A further aspect of the disclosure involves a grasper for use in a machining center, the grasper comprising: a stem for receipt in a tool holder and forming a cylinder; a piston received in the cylinder; and a plurality of claws coupled to the piston and the stem to be actuated between an open condition and a closed condition.

A further example of any of the foregoing may additionally and/or alternatively include a toolholder having a compartment receiving the stem.

A further example of any of the foregoing may additionally and/or alternatively include a coolant tube for mating with an air supply via the spindle.

A further aspect of the disclosure involves a method for using a machining center, the machining center comprising: a part holder for holding a part during machining; a plurality of tools including at least one cutting tool and a multi-claw grasper; a spindle for holding an in-use one of the plurality of tools; and a tool magazine containing at least a partial remainder of the plurality of tools. The method comprises: using the at least one cutting tool held by the spindle, machining an inner diameter (ID) surface of a part held by the part holder, the machining producing a cutting accumulation within the part; removing the at least one cutting tool from the spindle; installing the grasper to the spindle; and using the grasper held by the spindle, removing the cutting accumulation from the part.

In a further example of any of the foregoing, additionally and/or alternatively, the removing the cutting accumulation from the part comprises inserting the claw and closing the grasper.

In a further example of any of the foregoing, additionally and/or alternatively: the closing the grasper is via spring bias; the method further includes releasing the removed accumulation by opening the grasper; and the opening is via fluid pressure.

In a further example of any of the foregoing embodiments, additionally and/or alternatively, the opening is via air delivered through the spindle.

In a further embodiment of any of the foregoing, additionally and/or alternatively: the machining includes delivering cooling fluid from a cooling fluid reservoir; and the opening is via hydraulic pressure using said cooling fluid from said cooling fluid reservoir.

In a further example of any of the foregoing, additionally and/or alternatively: the removing the at least one cutting tool from the spindle and the installing the grasper to the spindle is with a arm type tool changer returning the cutting tool to the tool magazine and retrieving the grasper from the tool magazine; the tool magazine is a belt or chain magazine (e.g., a vertical chain magazine); and the part holder comprises a swiveling rotary table.

The features of the example above may be combined in any combination unless expressly indicated otherwise or technically infeasible.

The details of one or more example are set forth in the accompanying drawings and the description below. Other features, objects, and advantages will be apparent from the description and drawings, and from the claims.

### BRIEF DESCRIPTION OF THE DRAWINGS

FIG. 1 is a view of a machining center.
FIG. 2 is a view of a tool magazine of the machining center.
FIG. 3 is a view of a claw assembly in the machining center exploded away from a tool holder with the claw assembly in a closed condition.

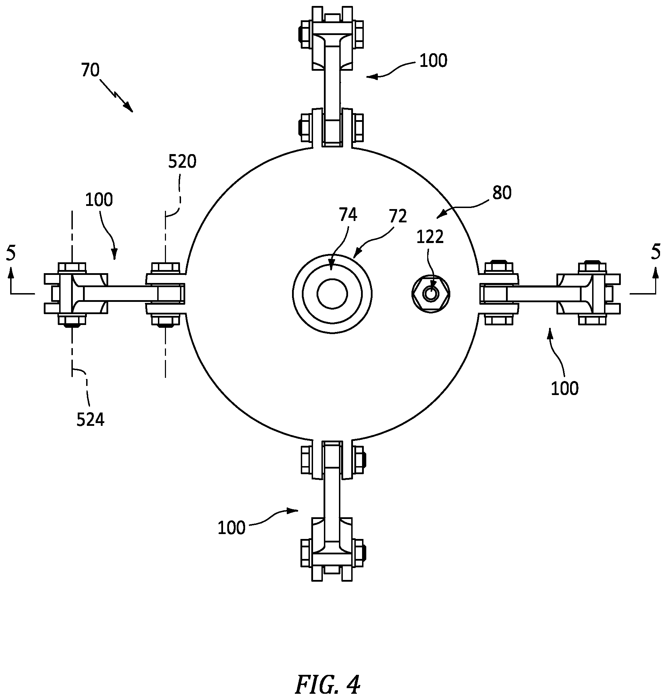

FIG. 4 is a top view of the claw assembly.
FIG. 5 is a central longitudinal view of the claw assembly, taken along line 5-5.
FIG. 6 is a corresponding central longitudinal sectional view of the claw assembly in an open condition.

Like reference numbers and designations in the various drawings indicate like elements.

### DETAILED DESCRIPTION

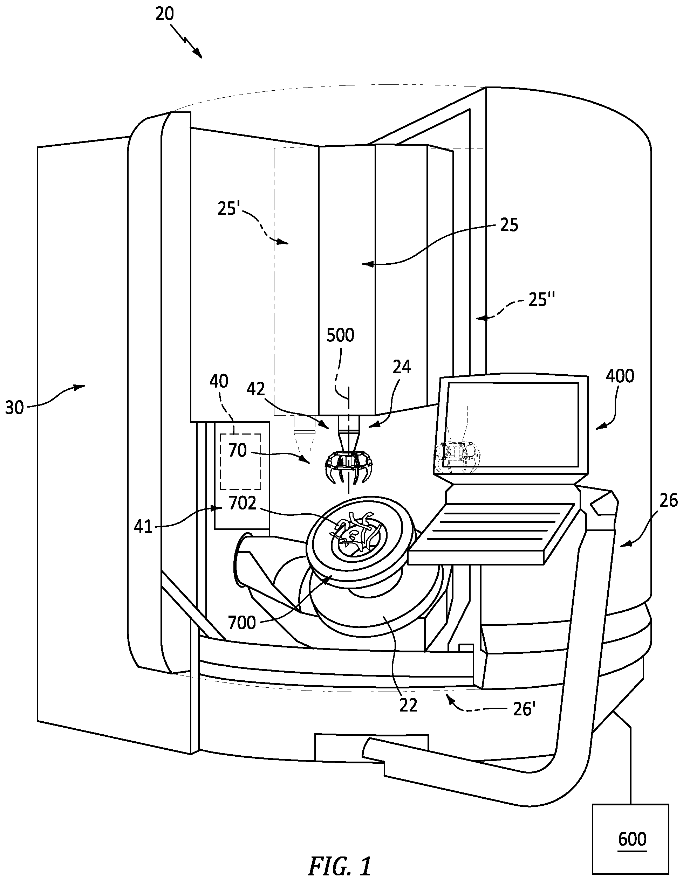

FIG. 1 shows a machining center 20 for machining a part 700. Example parts are generally annular such as bearing housings and tangential onboard injectors (TOBI. Others include Example components include disks (e.g., including integrally bladed disks), tangential onboard injectors (TOBI), seal housings and runners, bearing housings, spacers, and the like. The illustrated center may correspond to that of a given prior art manufacturer. However, the disclosure herein may apply to a broad variety of machining center configurations. To hold the part, the machining center includes a part holder 22. For machining and other operations, the machining center has a spindle 24. An example machining center is a five-axis center wherein the spindle may be driven for rotation about a spindle axis 500. Additionally, the spindle and part holder may have a combination of degrees of freedom to allow further machining processes.

In one group of examples, the spindle can also move along the axis and translate the axis laterally (left-right and front-back). FIG. 1 shows a spindle carriage/gantry 25 and a broken line position 25' laterally shifted toward a tool changer (schematically shown as 40 behind a door 41) to a position for transferring tools between the spindle and a tool magazine 30. In that group of examples, the part holder 22 comprises a swiveling rotary table. For example, it can rotate and tilt to provide five total axes/degrees of freedom in addition to spindle rotation. For purposes of illustration, a door 26 is shown in an open non-use position in solid line and then rotated to a broken line in-use position 26' isolating the internal workspace.

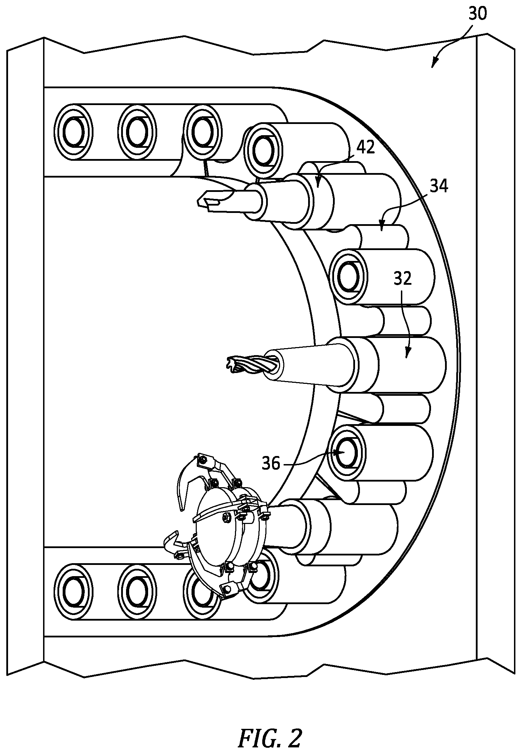

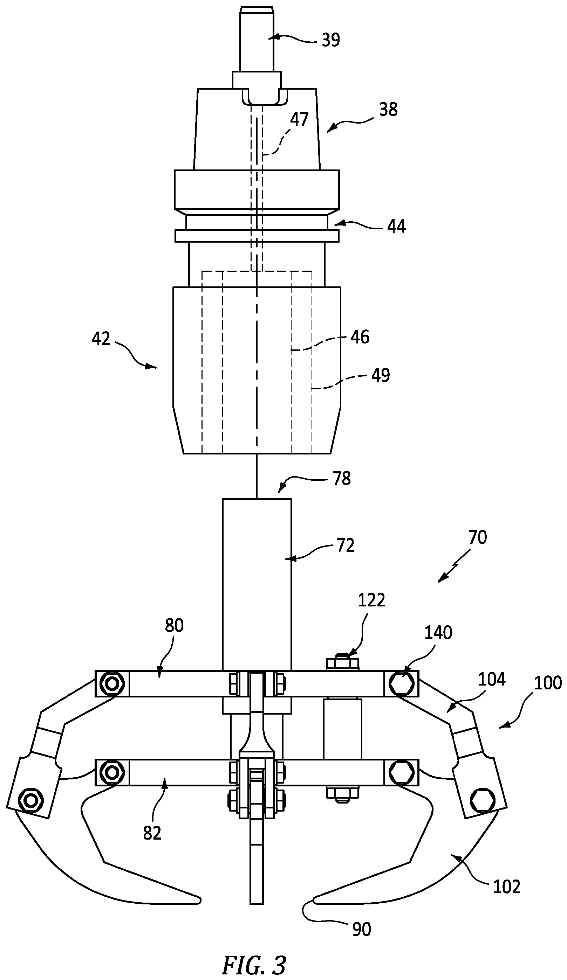

The example machining center also includes a tool magazine 30 (FIG. 2) for storing tools when not in use (e.g., belt-or chain-type such as a vertical chain magazine). The example magazine includes a plurality of receptacles 32 mounted to a belt or chain 34 to be driven in a circuit to bring a given receptacle into an operative position for transferring a tool held by that receptacle to the spindle or receiving a tool from the spindle. Each receptacle includes an interface 36 (e.g., a socket) complementary to a mounting interface 38 (FIG. 3, e.g., an external taper and internal lugs that also mount to the spindle) of a particular tool holder type associated with the machining center. The machining center also includes a tool changer 40 for transferring tools between the spindle and the magazine. Such tools may, themselves, be directly or indirectly mounted in respective aforementioned tool holders 42 (discussed further below). An example tool changer is an arm-type tool changer. The tool changer will typically have features complementary to one or more features 44 (FIG. 3) of the associated tool holder type to provide positive retention during transfer. For example, the features 44 may be peripheral grooves or grippers (e.g., one at each end of a center pivot arm to allow simultaneous engagement of a tool holder being removed from the spindle and returned to the magazine and another going the other way. The complementary feature of the tool changer may be an open channel to be received in the groove between adjacent flanges of the tool holder. The tool holder has a distal receptacle 46 for receiving a tool or a collet 49 intervening between the tool and the tool holder.

FIG. 3 also shows a passageway 47 through the tool holder for introducing air via the spindle and a coolant tube 38 for mating with the spindle to deliver the air.

To remove a bird's nest 702 of such chips/swarf from the interior of the machined part 700, a grasper or claw (device/mechanism/assembly) 70 may be mounted in the spindle and actuated between an open condition and a closed condition and moved relative to the part to remove and dispose of the chips/swarf. With the grasper in the spindle, additional tools are stored in the tool magazine. When not in use, the grasper itself may be transferred to the tool magazine via the tool changer and subsequently returned to the spindle via the tool changer for further use.

Among such example additional tools are turning tools such as those using carbide turning inserts. This may include one or more such tools whose use generated the bird's nest of chips/swarf. In an example such tool, the insert is held by an insert holder which, in turn, is held by the tool holder. Additional tools stored in the magazine and transferable to the spindle may include mills such as end mills and side mills. Other tools include drills, deburring tools, reamers, and the like. For each of these classes of tools, there may be multiple forms present including different sizes, different fineness v. coarseness, different profile shapes, and even simply just spares of otherwise identical tools.

The example grasper includes a shaft or shank 72 mountable in a tool holder (e.g., in the receptacle 46 either directly or via a collet (not shown)). In alternative embodiments (not shown), a separate conventional tool holder is omitted and the shank is merely part of (or replaced by) or mounted in a structure that presents the same interface(s) as the tool holders for mounting in the spindle, mounting in the magazine, and engagement by the tool changer. As is discussed further below, the example shank is hollow to form a cylinder accommodating at least a free end of a piston or piston 74. The shank has a fluid inlet 78 to receive fluid via the spindle. An example fluid is air introduced via the spindle. In conventional form, the air source/supply may be shop air 600 connected to the machining center. The opening is via pneumatic pressure. Closing may simply be by releasing the pneumatic pressure and allowing a spring bias (discussed below) to drive air out via leakage. If inherent leakage is not enough, a small aperture may be provided to vent from the interior of the cylinder. The aperture is not so large as to defeat the opening action of pneumatic pressure but sufficient to quickly vent and allow closure.

Alternative fluid is a liquid cooling fluid delivered through the spindle from a cooling fluid reservoir such as a tank and chiller system. The opening is via hydraulic pressure using said cooling fluid from said cooling fluid reservoir.

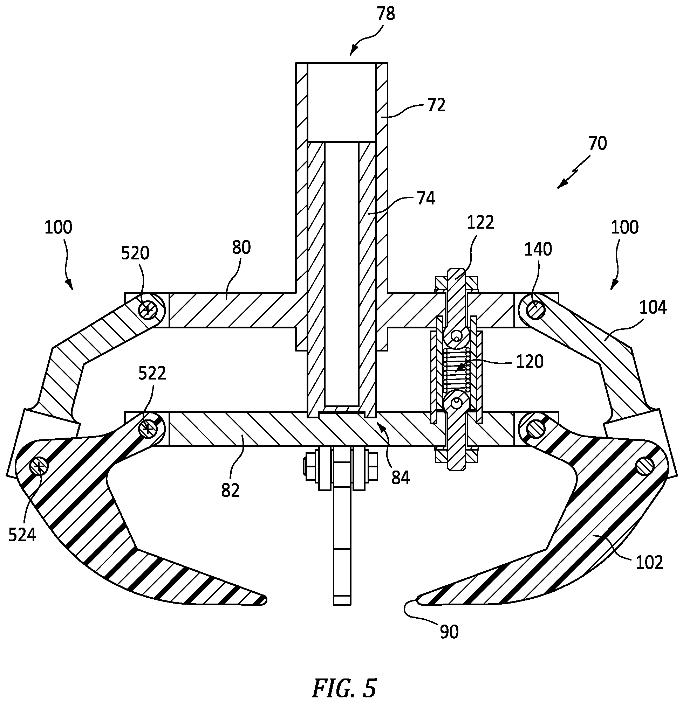

The shaft/shank/cylinder 72 is rigidly affixed (e.g., at a distal end thereof) to a first plate structure 80. The piston 74 is mounted to a second plate structure 82 so that extension of and retraction of the piston draw the plates 80,82 away from and toward each other. In the example, an end 84 (FIG. 5) of the piston (or of a shaft portion thereof) is mounted (e.g., welded, press/interference fit, threaded or fastener-secured) to the second plate 82.

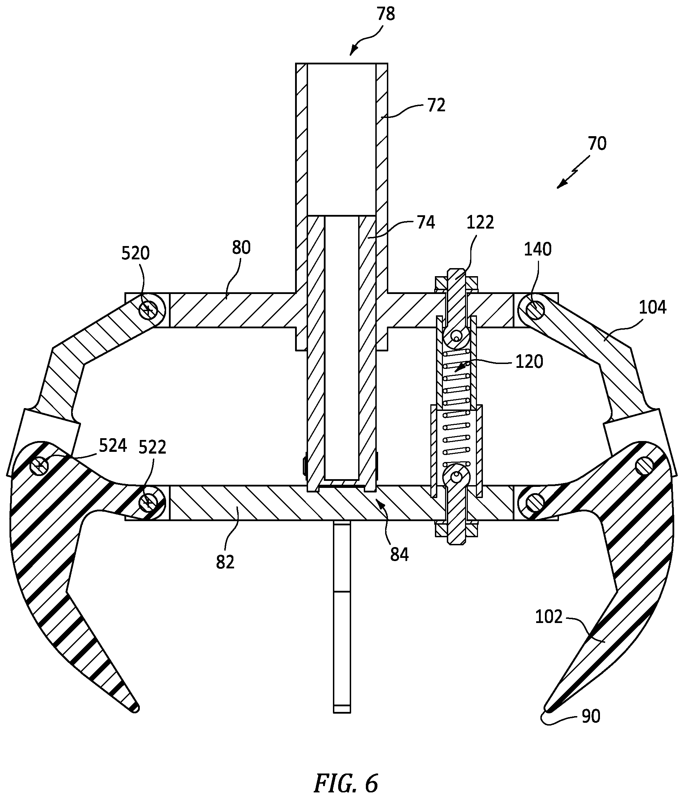

A plurality of claw subassemblies 100 (four shown, more broadly three to six) are pivotally coupled to the plates 80 and 82 at respective axes 520 and 522. Each example claw subassembly includes a claw piece 102 and a driving link 104. In the example embodiment, the claw piece is pivotally mounted to the second plate 82 at the associated axis 522 and the driving link is pivotally mounted to the first plate 80 at the associated axis 520. The links and claw pieces of each subassembly 100 are connected to each other at associated pivot axes 524. In the specific example, when the piston 74 is extended (e.g., from FIG. 5 to/toward FIG. 6), the links rotate the claw distal ends or tips 90 outward. And when the piston is contracted, the links rotate the claw tips inward. Example pivot mechanisms at the axes 520, 522, and 524 are shoulder bolts 140 with nylon nuts. Alternatives are pins. However, the bolts/nuts allow quick replacement of worn claws 102.

Additionally, there may be other features such as seals, wipers, and the like. For example, a wiper (not shown, e.g., an elastomeric gasket) may be mounted on the underside of the first plate to keep any chips or other debris from entering the cylinder; or the grasper could comprise a bellows mechanism between the plates enclosing the portion of the piston between the plates.

In the illustrated example, the plates 80 and 82 each have four clevises for forming the associated portions of pivot mechanisms engaging/receiving proximal ends of the driving links 104 and claw pieces 102, respectively. Similarly, the example driving links 104 have, at their distal ends, clevises for receiving an intermediate portion of the associated claw piece. Example bolts 140 thus pass through respective apertures in the clevises and received portions of the driving link and claw piece.

Example claw pieces 102 are non-metallic so as to minimize chances of scratching or otherwise damaging the parts. Example materials are engineering plastics such as acetal homopolymer (polyoxymethylene (POM)). Example materials for the links and plates are aluminum alloys which may be machined or additively manufactured or otherwise made. Aluminum alloys offer relative lightness and reduce chances of damaging any equipment they come into contact with. The piston and shank may also be aluminum. However, it may be desirable to make the shank out of steel if aluminum is insufficiently strong for a desired cylinder bore diameter. However, as noted above, if integrated with a structure that replaces the tool holder, a machined or additively manufactured aluminum body may be efficient. Such may integrate, into a single body, structures that replace the first plate, cylinder, and mounting and transfer interfaces.

In the example grasper, a spring 120 (FIG. 5) biases the mechanism toward the retracted plate/closed claw condition. An example spring is a metallic tension coil spring that draws the plates together to provide such bias. In the illustrated example, the loop ends of the spring 120 are received in eyelets of eye-bolts 122 respectively passing through apertures in the plates 80 and 82 and secured such as via nuts. The example spring is protected by telescoping sleeves with a respective sleeve mounted to and extending from a facing surface of each of the plates 80 and 82. Alternative springs may operate in compression to provide tension (e.g., a spring is captured by a shoulder at one end of a cylinder mounted to the first plate). The opposite end of the spring is captured against the underside of a piston whose shaft/stem extends through the spring and an aperture in the first end of the cylinder to, in turn, be secured to the second plate.

Component materials and manufacture techniques and assembly techniques may be otherwise conventional. Additionally, the non-metallic claws may be additively manufactured or injection molded. Their pivot holes may be as-printed or molded or may be drilled.

In use, after a machining operation generating the bird's nest 702, the tool changer removes the final machining tool from the spindle and places it in a receptacle in the transfer position of the magazine. The magazine may be indexed to bring the grasper into the transfer position. The tool changer may then transfer the grasper to the spindle. The machining center then introduces fluid to the cylinder to open the grasper. The machining center engages in manipulations of the spindle and or part holder to bring the grasper claws into close proximity or contact with the bird's nest. The machining center then relieves fluid pressure to allow the claws to close under spring bias and grasp the bird's nest. Then, the spindle may retract and translate to proximity to a release location 25''. For example, this release location may be above a baseline chip conveyor (not shown) that, in turn, delivers chips to a waste bin or other receptacle. This may all be done under the command/programming of the machining center's controller 400 (e.g., an integrated controller such as one including a computer.)

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing baseline configuration, details of such baseline may influence details of particular implementations. In one aspect, such baseline may be the particular machining center and the tool holder. In other aspects, the influential baseline may be the particular part being machined. As an example of the latter, it may be possible to have graspers of different sizes (e.g., maximum opening transverse dimensions between claw tips) associated with different sizes of ID aperture or compartment. Accordingly, other embodiments are within the scope of the following claims.

## Claims

1. A machining center (20) comprising:
a part holder (22) for holding a part (700) during machining;
a plurality of tools (70);
a spindle (24) for holding an in-use tool (70) of the plurality of tools (70);
a tool magazine (30) containing at least a partial remainder of the plurality of tools (70); and
a tool changer (40) for transferring tools (70) between the tool magazine (30) and the spindle (24),
wherein:
at least one of the plurality of tools (70) is a grasper (70) comprising:
a plurality of claws (102) shiftable between a first condition and a second condition, the second condition open relative to the first condition; and
multiple other of the plurality of tools (70) are held by respective tool holders (42).

2. The machining center of claim 1 wherein:
the grasper (70) is fluid actuated; and
a fluid supply path for actuating the grasper (70) passes through the spindle (24).

3. The machining center of claim 1 or 2 wherein:
the grasper (70) is spring biased toward a closed condition.

4. The machining center of any preceding claim wherein:
at least one of the plurality of tools (70) comprises a carbide bit.

5. The machining center of any preceding claim wherein the grasper (70) is a multi-claw grasper (70).

6. The machining center of any preceding claim wherein the grasper (70) comprises:
a plurality of links (104) respectively associated with said plurality of claws (102);
a shank (72); and
a piston (74) reciprocally movable within the shank (72), wherein:
each of the claws (102) has:
a distal end (90);
a respective first pivot axis (522) relative to the piston (74); and
a respective second pivot axis (524) relative to the associated link (104); and
each of the links (104) has:
a respective third pivot axis (520) relative to the shank (72).

7. The machining center of claim 6 wherein:
the claws (102) are made of polyoxymethylene (POM); and
the links (104) are made of aluminum alloy.

8. The machining center of claim 6 or 7, wherein the shank (72) is held by a tool holder (42), optionally wherein the machining center further comprises a fluid passageway (47) through the tool holder (42).

9. A method for using the machining center (20) of claim 1, the method comprising:
using a cutting tool held by the spindle (24), machining an inner diameter (ID) surface of a part (700) held by the part holder (22), the machining producing a cutting accumulation within the part (700);
using the tool changer (40):
removing the at least one cutting tool from the spindle (24); and
installing the grasper (70) to the spindle (24); and
using the grasper (70) held by the spindle (24), removing the cutting accumulation from the part (700), optionally wherein:
the removing comprises pneumatically opening the grasper (70) via the spindle (24); and/or
the part (700) is selected from the group consisting of bearing housings and tangential onboard injectors (TOBI).

10. A grasper (70) for use in a machining center (20), the grasper (70) comprising:
a stem (72) for receipt in a tool holder (42) and forming a cylinder (72);
a piston (74) received in the cylinder (72); and
a plurality of claws (102) coupled to the piston (74) and the stem (72) to be actuated between an open condition and a closed condition,
optionally wherein the grasper (70) further comprises a toolholder (42) having a compartment (46) receiving the stem (72), further optionally, wherein the grasper (70) further comprises a coolant tube (38) for mating with an air supply (600) via a spindle (24).

11. A method for using a machining center (20), the machining center (20) comprising:
a part holder (22) for holding a part (700) during machining;
a plurality of tools (70) including at least one cutting tool and a multi-claw grasper (70);
a spindle (24) for holding an in-use one of the plurality of tools (70); and
a tool magazine (30) containing at least a partial remainder of the plurality of tools (70),
the method comprising:
using the at least one cutting tool held by the spindle (24), machining an inner diameter (ID) surface of a part (700) held by the part holder (22), the machining producing a cutting accumulation within the part (700);
removing the at least one cutting tool from the spindle (24);
installing the grasper (70) to the spindle (24); and
using the grasper (70) held by the spindle (24), removing the cutting accumulation from the part (700).

12. The method of claim 11 wherein:
the removing the cutting accumulation from the part (700) comprises inserting a claw (102) of the grasper (70) and closing the grasper (70).

13. The method of claim 12 wherein:
the closing the grasper (70) is via spring bias;
the method further includes releasing the removed accumulation by opening the grasper (70); and
the opening is via fluid pressure, optionally wherein the opening is via air delivered through the spindle (24).

14. The method of claim 13 wherein:
the machining includes delivering cooling fluid from a cooling fluid reservoir; and
the opening is via hydraulic pressure using said cooling fluid from said cooling fluid reservoir.

15. The method of any of claims 12 to 14 wherein:
the removing the at least one cutting tool from the spindle (24) and the installing the grasper (70) to the spindle (24) is with an arm-type tool changer (40) returning the cutting tool to the tool magazine (30) and retrieving the grasper (70) from the tool magazine (30);
the tool magazine (30) is a belt (34) or chain (34) magazine (30); and
the part holder (22) comprises a swiveling rotary table.
